(19) **Europäisches Patentamt / European Patent Office / Office européen des brevets**

(11) **EP 3 883 844 B1**

(12) **FASCICULE DE BREVET EUROPEEN**

(45) Date de publication et mention de la délivrance du brevet:
**09.11.2022 Bulletin 2022/45**

(21) Numéro de dépôt: **19805969.3**

(22) Date de dépôt: **20.11.2019**

(51) Classification Internationale des Brevets (IPC):
**B62J 1/00** *(2006.01)* **B62J 1/08** *(2006.01)*
**A63B 22/06** *(2006.01)* **A63B 24/00** *(2006.01)*
**A63B 23/04** *(2006.01)* **A63B 22/00** *(2006.01)*
**B62J 45/415** *(2020.01)* **A63B 71/06** *(2006.01)*

(52) Classification Coopérative des Brevets (CPC):
**B62J 1/005; A63B 22/0046; A63B 22/0605;**
**A63B 23/0476; A63B 24/0087; B62J 1/08;**
**B62J 45/4151; B62J 45/4152;** A63B 2071/0652;
A63B 2220/16; A63B 2220/803; A63B 2220/805;
A63B 2220/833; A63B 2225/50; A63B 2230/62

(86) Numéro de dépôt international:
**PCT/EP2019/081983**

(87) Numéro de publication internationale:
**WO 2020/104554 (28.05.2020 Gazette 2020/22)**

(54) **APPAREIL D'EXERCICE PHYSIQUE ET MÉTHODE D'ENTRAÎNEMENT SUR UN TEL APPAREIL**

VORRICHTUNG FÜR KÖRPERLICHE BETÄTIGUNG UND VERFAHREN ZUM TRAINING AUF SOLCH EINER VORRICHTUNG

PHYSICAL EXERCISE APPARATUS AND METHOD FOR TRAINING ON SUCH AN APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2018 FR 1871683**

(43) Date de publication de la demande:
**29.09.2021 Bulletin 2021/39**

(73) Titulaire: **Inawa Developpement**
**94200 Ivry sur Seine (FR)**

(72) Inventeurs:
• **BETRANCOURT, Alain**
**26100 ROMANS SUR ISERE (FR)**

• **CHAIGNE, Ambroise**
**79300 BRESSUIRE (FR)**
• **MALOSSE, Pauline**
**26600 PONT DE L'ISERE (FR)**

(74) Mandataire: **Lavoix**
**62, rue de Bonnel**
**69448 Lyon Cedex 03 (FR)**

(56) Documents cités:
**EP-A1- 3 208 183      WO-A1-2013/135697**
**DE-A1- 10 242 447      US-A1- 2014 221 158**

**Description**

La présente invention concerne un appareil d'exercice physique comprenant, entre autres, une selle avec deux sellettes susceptibles de mouvement de tangage, de roulis et de lacet par rapport à un cadre. La présente invention concerne également une méthode d'entraînement d'un utilisateur mise en œuvre sur un tel appareil.

Dans les domaines de l'entraînement de sportifs, de la rééducation fonctionnelle ou du maintien en forme de personnes âgées, il est connu, par exemple de WO-A-2013/135697 d'utiliser une selle de proprioception qui comprend deux sellettes susceptibles de mouvement de tangage T, de roulis R et de lacet L par rapport au cadre d'un appareil d'exercice physique. Avant que l'utilisateur commence à pédaler, un professionnel de santé ou un entraîneur peut régler, a priori, l'appareil d'exercice physique en tenant compte des mensurations et, éventuellement, de la pathologie de l'utilisateur. Selon la corpulence de l'utilisateur, il n'est pas aisé de vérifier que celui-ci est correctement installé sur la selle car son bassin et ses cuisses masquent la selle. Il n'est donc pas certain que la posture de l'utilisateur sur l'appareil d'exercice physique est correcte. Or, si sa posture n'est pas correcte, l'utilisateur peut ne pas bénéficier totalement de l'exercice physique, voire générer une pathologie supplémentaire par mauvais usage. En outre, les éventuels progrès de l'utilisateur lors de séances d'exercices successives, ne peuvent pas être quantifiés.

C'est à ces inconvénients qu'entend plus particulièrement remédier l'invention en proposant un nouvel appareil d'exercice physique qui permet de s'assurer que l'utilisateur est correctement positionné sur la selle et qui permet de détecter les éventuels progrès de l'utilisateur, notamment la progression de sa souplesse de bassin.

A cet effet, l'invention concerne un appareil d'exercice physique comprenant un cadre équipé d'un pédalier et d'une selle, cette selle comprenant elle-même un châssis fixé sur le cadre, deux sellettes et des moyens d'articulation de chaque sellette par rapport au châssis autour d'un axe de tangage, autour d'un axe de roulis et autour d'un axe de lacet. Conformément à l'invention, l'appareil comprend également des capteurs de détection d'un mouvement de tangage T, d'un mouvement de roulis R et d'un mouvement de lacet L de chaque sellette, respectivement autour des axes de tangage, roulis et lacet, ces mouvements résultant d'un pédalage effectué par un utilisateur. L'appareil comprend également au moins une unité de calcul configurée pour déterminer, à partir des signaux de sortie des capteurs, des amplitudes angulaires des mouvements T, R et L de tangage, roulis et lacet et de la position, sur chaque sellette, du point d'appui d'un ischion de. Enfin, cet appareil comprend au moins un écran d'affichage, en fonction des amplitudes angulaires déterminées par l'unité de calcul, de la position sur chaque sellette d'un point d'appui d'un ischion de l'utilisateur en train de pédaler.

Grâce à l'invention, l'utilisateur ou la personne qui l'assiste, notamment un professionnel de santé ou un entraîneur, est en mesure d'évaluer si sa posture sur la selle de l'appareil d'exercice physique de l'invention est correcte, en repérant sur l'écran d'affichage la position des points d'appui de ses ischions en cours de pédalage. Ceci permet à l'utilisateur ou à la personne qui l'assiste de modifier éventuellement la posture de l'utilisateur afin de corriger une dissymétrie ou un déséquilibre de ses appuis. En outre, l'appareil de l'invention peut permettre, en gardant éventuellement une trace des paramètres déterminés par l'unité de calcul, de comparer ces paramètres d'une séance d'exercice à l'autre ou en cours de séance, afin d'évaluer les éventuels progrès de l'utilisateur.

Selon des aspects avantageux mais non obligatoires de l'invention, un tel appareil d'exercice physique peut incorporer une ou plusieurs des caractéristiques suivantes, prises selon toute combinaison techniquement admissible :

- Les capteurs de détection incluent au moins une cellule inertielle fixée sur chaque sellette.
- Les cellules inertielles détectent les mouvements de tangage et de roulis et au moins un capteur optique est utilisé pour détecter le mouvement de lacet de chaque sellette.
- L'unité de calcul est configurée pour déterminer un écart entre la position de chaque point d'appui sur la sellette et une position de référence et l'écran est configuré pour afficher cet écart.
- L'écran est disposé en face de l'utilisateur assis sur la selle, de préférence au niveau d'un guidon l'appareil.

Selon un autre aspect, l'invention concerne une méthode d'entraînement d'un utilisateur sur un appareil d'exercice physique tel que mentionné ci-dessus, cette méthode comprenant des étapes consistant à :

a) détecter les mouvements de tangage T, de roulis R et de lacet L au moyen des capteurs ;
b) déterminer les amplitudes angulaires des mouvements de tangage, roulis et lacet ; et
c) afficher sur l'écran les positions des points d'appui des ischions, en fonction des amplitudes angulaires déterminées par l'unité de calcul.

Cette méthode facilite la vérification de la posture de l'utilisateur et son éventuelle correction, en tenant compte des données affichées sur l'écran.

Selon des aspects avantageux mais non obligatoires de l'invention, cette méthode peut incorporer une ou plusieurs des caractéristiques suivantes :

- Des cellules inertielles détectent les mouvements de tangage et de roulis, au moins un capteur optique est utilisé pour détecter le mouvement de lacet de chaque sellette et l'étape b) comprend les sous-étapes suivantes :

    b1) calcul, de préférence par un algorithme de Madgwick à 6 axes, de valeurs approximatives des amplitudes de tangage et de roulis, sur la base de composantes vectorielles des mouvements de tangage et de roulis déterminées par les cellules inertielles ;
    b2) calcul de composantes vectorielles correspondant à un signal de sortie d'un magnétomètre, sur la base du signal de sortie du capteur optique et des valeurs approximatives calculées à la sous-étape b1) ;
    b3) calcul, de préférence par un algorithme de Madgwick 9 axes, des valeurs des amplitudes de tangage, roulis et lacet.

- Lors de l'étape c), l'écran affiche également les amplitudes angulaires déterminées à l'étape b).
- La méthode comprend des étapes supplémentaires consistant à :

    d) déterminer un unique symbole (588) représentatif des amplitudes angulaires ($\alpha$, $\beta$, $\gamma$), chaque amplitude angulaire ($\alpha$, $\beta$, $\gamma$) correspondant à une dimension respective dudit symbole ;
    e) afficher sur l'écran (29) le symbole déterminé à l'étape d).

- L'unité de calcul est configurée pour déterminer un écart entre la position de chaque point d'appui sur la sellette et une position de référence, l'écran est configuré pour afficher cet écart et, lors de l'étape c), l'écran affiche une représentation des sellettes, les positions d'appui des ischions par rapport à la représentation des sellettes et une représentation de la position de référence par rapport à la représentation des sellettes.

L'invention sera mieux comprise et d'autres avantages de celle-ci apparaîtront plus clairement à la lumière de la description qui va suivre d'un mode de réalisation d'un appareil d'exercice physique et d'une méthode d'entraînement conformes à son principe, donnée uniquement à titre d'exemple et faite en référence aux dessins annexés dans lesquels :

    [Fig 1] La figure 1 est une représentation schématique de principe d'un appareil d'exercice physique conforme à l'invention ;
    [Fig 2] La figure 2 est une vue de côté, à plus grande échelle, de la selle et une représentation schématique de certains autres composants de l'appareil de la figure 1 ;

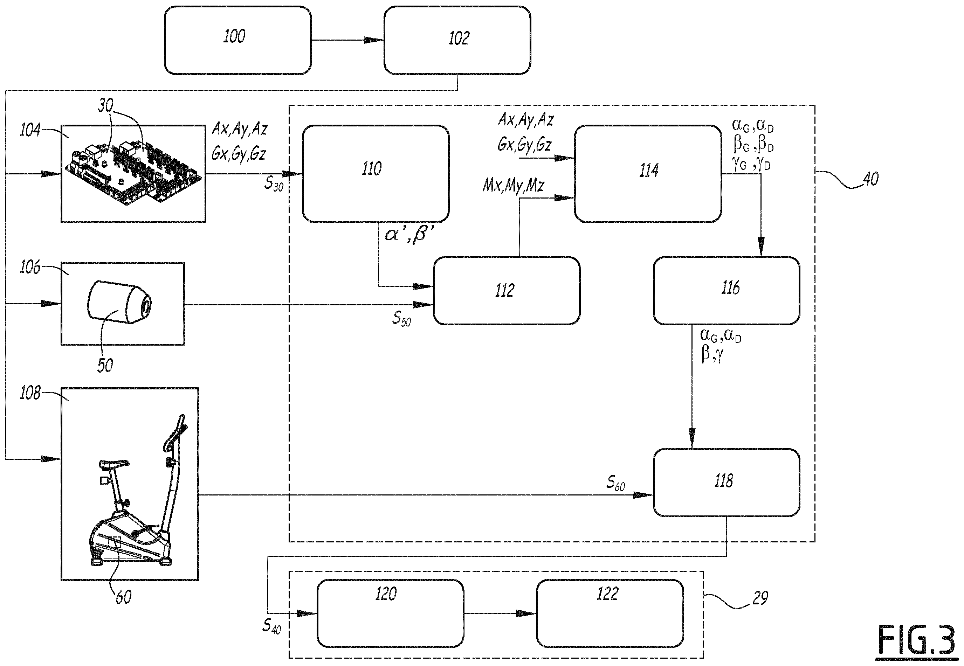

    [Fig 3] La figure 3 est un schéma blocs de principe d'une méthode conforme à l'invention ;
    [Fig 4] La figure 4 est une vue d'un écran d'affichage de l'appareil des figures 1 et 2 mettant en œuvre la méthode de la figure 3 et
    [Fig 5] La figure 5 est une vue à plus grande échelle du détail V à la figure 4.

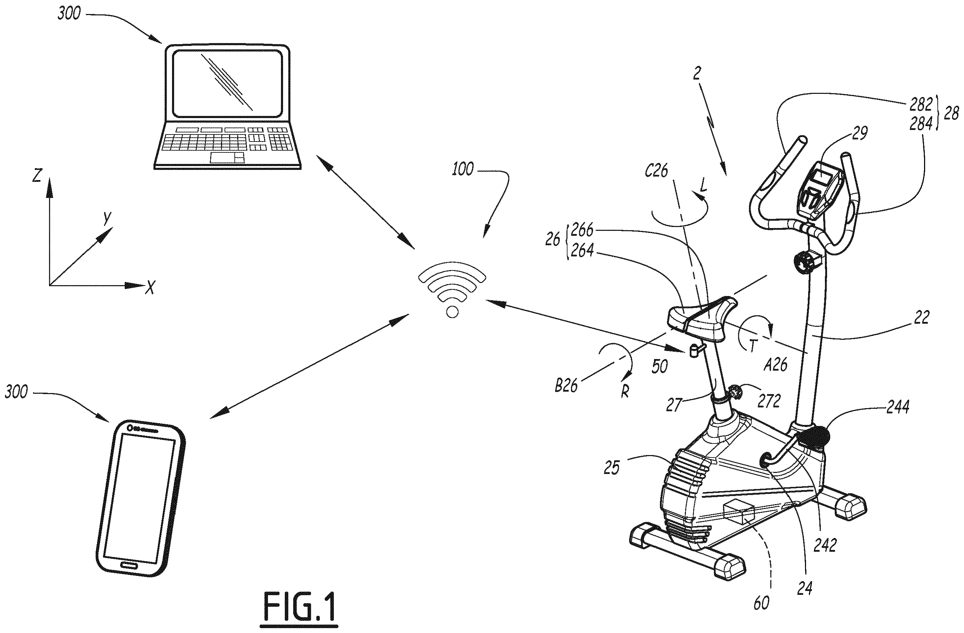

L'appareil 2 représenté à la figure 1 est destiné à permettre à un utilisateur de pratiquer un exercice physique en pédalant, ce qui permet d'améliorer la mobilité de son bassin et/ou d'entretenir, voire développer, ses capacités cardiovasculaires

L'appareil 2 comprend un cadre 22 équipé d'un pédalier 24 et qui supporte une selle 26 ainsi qu'un guidon 28, selon une répartition connue pour un vélo d'appartement. L'appareil 2 est de type vélo d'appartement.

Le pédalier 24 comprend deux manivelles et deux pédales, une seule de ces manivelles et une seule de ces pédales étant visibles à la figure 1, respectivement avec les références 242 et 244.

Un système, non représenté et réglable, de freinage du pédalier 24 est prévu, à l'intérieur d'un capot 25, afin de permettre de moduler, en fonction de l'exercice à réaliser, l'effort que doit exercer un utilisateur pour pédaler.

La selle 26 est supportée par une tige de selle 27 montée de façon réglable sur le cadre 22 et immobilisée grâce à une vis de serrage non représentée, commandée par une mollette 272.

Un écran 29 est monté en partie supérieure du cadre 22, entre les deux branches 282 et 284 du guidon 28. Ainsi, cet écran 29 est visible par un utilisateur assis sur la selle 26.

La selle 26 comprend un châssis 262 fixé sur la tige de selle 27, donc monté sur le cadre 22 par l'intermédiaire de cette tige. La selle 26 comprend également deux sellettes, à savoir une sellette gauche 264 et une sellette droite, 266. La selle comprend, en outre, des organes d'articulation de chaque sellette par rapport au châssis 262. Ces organes d'articulation incluent un berceau 267 d'articulation des sellettes, indépendamment l'une de l'autre sellette, autour d'un axe de tangage A26 défini par le berceau 267. Le berceau 267 est lui-même supporté par un élément élastiquement déformable 268 qui constitue un autre organe d'articulation des sellettes. L'élément élastiquement déformable 268 est prévu pour se déformer élastiquement lors d'un mouvement de roulis R du berceau 267 autour d'un axe B26 parallèle à la direction avant/arrière de la selle 26. D'autre part l'élément élastiquement déformable 268 est prévu pour se déformer élastiquement lors d'un mouvement de lacet L du berceau 267 autour d'un axe C26 globalement vertical et parallèle à, ou confondu avec, un axe longitudinal de la tige de selle 27. Les mouvements de tangage des sellettes 264 et 266 sont indépendants l'un de l'autre, alors que leurs mouvements de roulis R et de lacet L sont les mêmes, puisqu'ils résultent de la déformation élastique de l'élément 268 qui leur est commun.

De préférence, il est ici fait application de l'enseignement technique de WO-A-2013/135697.

En variante, une autre structure peut être prévue pour la selle 26, notamment avec des sellettes dont les mouvements de tangage, roulis et lacet sont indépendants.

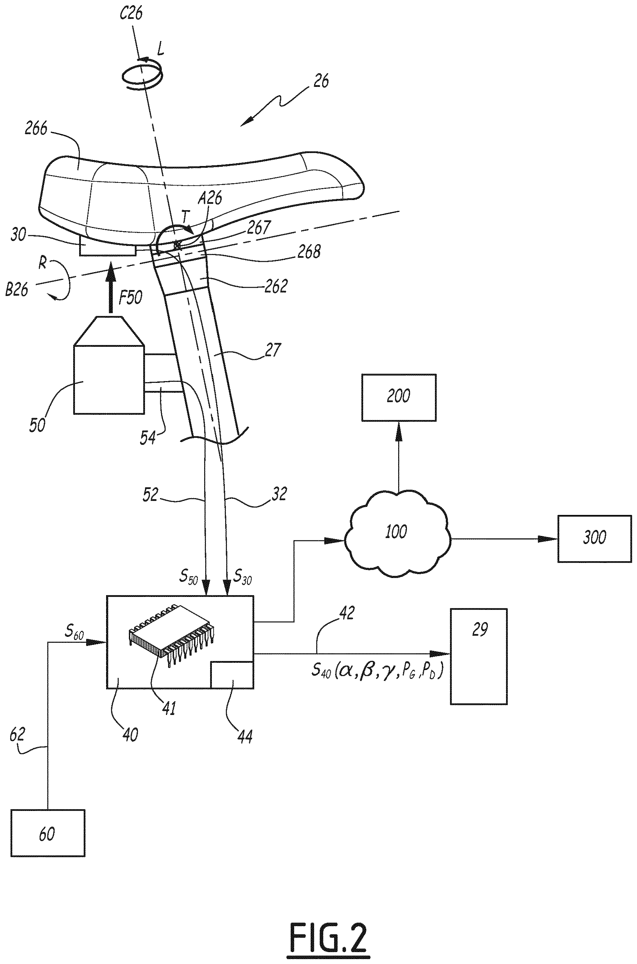

La selle 26 est équipée de deux cellules inertielles. Une cellule inertielle est disposée sous chacune des sellettes 264 et 266, seule la cellule disposée sous la sellette 266 étant visible à la figure 2, avec la référence 30. Cette référence est utilisée pour désigner chacune de ces deux cellules.

Chaque cellule inertielle 30 est capable de détecter des accélérations selon trois axes d'un repère orthogonal X-Y-Z d'un espace dans lequel est installé l'appareil 2. Ainsi, chaque cellule inertielle 30 est capable de fournir trois composantes d'accélération Ax, Ay et Az, respectivement parallèles aux axes X, Y et Z, et trois composantes de rotation Gx, Gy et Gz, autour de ces axes. Chaque centrale inertielle 30 fonctionne à une fréquence de 100 Hz.

En pratique, chaque cellule inertielle 30 peut être formée par une carte électronique commercialisée par la société NXP sous la référence BRKT-STBC-AGM01 qui intègre deux types de capteurs inertiels, à savoir un accéléromètre-magnétomètre FXOS8700 et un gyromètre FXPS21002. Ici, la fonction magnétomètre du composant FXOS8700 n'est pas utilisée. En d'autres termes, ce magnétomètre n'est pas actif.

En variante, d'autres types de cellules inertielles peuvent être utilisées.

Les composantes Ax, Ay, Az, Gx, Gy et Gz déterminées l'une des centrales inertielles 30 sont représentatives du mouvement de tangage T et du mouvement de roulis R de la sellette 264 ou 266 sous laquelle est installée la cellule inertielle 30 en question.

Les signaux de sortie des deux cellules inertielles 30 sont fournis à une unité de calcul 40 qui comprend entre autres, un microprocesseur 41 programmé pour effectuer des opérations de calcul détaillées ci-après, ainsi qu'une mémoire 44 de stockage de données.

Une liaison de données 32 relie chaque cellule inertielle 30 à l'unité de calcul 40 et permet de convoyer le signal de sortie $S_{30}$ de la cellule inertielle 30 en question, ce signal de sortie incluant les composantes Ax, Ay, Az, Gx, Gy et Gz.

L'appareil 2 comprend également un capteur optique 50 disposé sous la selle 26 et dont la direction de visée, représentée par la flèche F50 à la figure 2, est orientée vers la selle 30, selon une direction globalement parallèle à l'axe C26. Le capteur optique 50 est utilisé pour déterminer le mouvement de lacet L de la selle 26 autour de l'axe C26.

Pour ce faire, une cible, non représentée, peut être fixée sous la selle 26, afin de faciliter la visée du capteur optique 50. La cible est composée de deux points de repères, soit des réflecteurs, soit des diodes électroluminescentes ou LEDS.

Le capteur optique 50 est monté sur la tige de selle 27 au moyen d'un support 54 et relié à l'unité de calcul 40 par une liaison de données 52 à travers laquelle circule le signal de sortie $S_{50}$ du capteur optique 50 qui inclut un angle correspondant à la déviation instantanée de la selle 26 autour de l'axe C26, par rapport à une position de repos, et/ou à l'amplitude angulaire $\gamma$ du mouvement de lacet L de la selle 26. Le capteur optique émet le signal $S_{50}$ représentatif de la position 2D, c'est-à-dire les coordonnées en pixels, des points lumineux de la cible, avec réflecteurs ou avec LEDS, qu'il détecte.

Le capteur optique 50 fonctionne à une fréquence de 50 Hz.

En pratique, le capteur optique 50 peut être du type SEN0158 commercialisé par la société DFRobot.

En variante, d'autres types de capteurs optiques peuvent être utilisés.

Un ensemble de capteurs 60 est intégré à l'appareil d'exercice physique 2, au voisinage du pédalier 24 et permet de détecter la vitesse V de rotation du pédalier 24, la durée D du pédalage et la puissance instantanée P du pédalage. Ces données sont collectées à une fréquence de l'ordre de 1 Hz, afin de vérifier notamment que la vitesse V et la puissance D ne sont pas trop élevées dans le cadre d'un exercice de relaxation qui vise à augmenter la mobilité du bassin d'un utilisateur. L'ensemble de capteurs 60 comprend également un capteur, non représenté et qui peut être porté par l'utilisateur, permettant de déterminer la fréquence cardiaque F de l'utilisateur en train de pédaler.

L'ensemble de capteurs 60 est relié à l'unité de calcul 40 par une liaison de données 62 qui permet d'acheminer le signal de sortie $S_{60}$ de cet ensemble de capteurs, ce signal de sortie incluant les grandeurs V, D et P.

On remarque que, même si des centrales inertielles, dont celle mentionnée ci-dessus à titre d'exemple, incluent un magnétomètre sont connues dans la littérature, l'utilisation d'un magnétomètre n'est pas préférée dans le mode de réalisation de l'invention représenté sur les figures car un magnétomètre est sujet à des perturbations électromagnétiques qui peuvent fausser le résultat des mesures. Or, de telles perturbations sont susceptibles de se produire dans l'espace où est installé l'appareil 2, notamment du fait que l'utilisateur ou la personne qui l'assiste, en particulier un personnel soignant ou un entraîneur, peuvent porter sur eux un téléphone portable ou un autre dispositif électronique. En outre, certains utilisateurs peuvent être équipés d'une prothèse de hanche métallique qui constitue une masse ferromagnétique relativement importante disposée à proximité de la selle 26, susceptible de perturber le fonctionnement d'un magnétomètre. D'autre part, l'amplitude angulaire $\gamma$ du mouvement de lacet L est relativement faible, typiquement inférieure à 15°, au point qu'une erreur absolue de quelques degrés sur la mesure de cet angle induirait une erreur relative importante.

Le fait d'utiliser le capteur optique 50 pour compléter la mesure du mouvement de lacet L, par rapport à la mesure des mouvements de tangage T et de roulis R obtenue par les cellules inertielles 30, évite les inconvénients découlant des perturbations électromagnétiques d'un magnétomètre.

Toutefois, si la pièce dans laquelle est installé l'appareil d'exercice physique 2 peut être protégée contre les perturbations électromagnétiques et si les personnes présentes dans cette pièce ne portent pas d'appareil électromagnétique ou de masse ferromagnétique significative, on peut envisager l'utilisation de cellules inertielles avec un magnétomètre actif, à la place du capteur optique 50.

L'unité de calcul 40 est reliée à l'écran 29, par une liaison de données filaire 42 sur laquelle circule le signal de sortie $S_{40}$ de l'unité de calcul 40. Ce signal de sortie inclut des informations destinées à l'utilisateur, qui peut les visualiser sur l'écran 29 alors qu'il est assis sur la selle 26.

Le signal $S_{40}$ inclut également des informations, qui peuvent être les mêmes ou différentes de celles affichées sur l'écran 29 et qui sont destinées à la personne qui assiste l'utilisateur. A cet égard, le signal S40 peut être envoyé via une liaison de données sans fil, telle qu'une liaison radioélectrique, notamment au moyen d'un réseau sans fil 100, tel qu'un réseau Wi-Fi (de l'anglais *wireless network*) ou encore un réseau Bluetooth, vers un téléphone portable 200 ou un ordinateur portable 300. Le téléphone portable 200 ou l'ordinateur 300 peuvent être ceux de la personne assistant l'utilisateur, voire ceux de l'utilisateur. Ces deux matériels permettent d'afficher et de stocker les données reçues de l'unité de calcul 40 en vue d'une analyse postérieure à une séance d'exercice sur l'appareil 2. Ces données peuvent également être stockées dans la mémoire 44.

Dans la mesure où ils sont utilisés avec l'appareil 2, on considère que le téléphone portable 200 et l'ordinateur 300 constituent des écrans d'affichage de cet appareil, même si ce n'est pas leur unique fonction, à la différence de l'écran 29.

Dans l'exemple, l'unité de calcul est constituée par une carte électronique. En variante, l'unité de calcul 40 est constituée de plusieurs unités physiques réparties dans l'appareil 2. En pratique, l'unité 40 peut être située sous le capot 25 ou au dos de l'écran 29

La distance entre l'unité 40 et les capteurs doit être la plus courte possible. Plutôt qu'une unité 40 éloignée de la selle 26 et des capteurs 30 et 50, on privilégie une unité 40 située à proximité. La position sous le capot 25 est donc uniquement un exemple.

Lors d'une séance d'exercice d'un utilisateur sur l'appareil 2, les différents composants électroniques mentionnés ci-dessus sont démarrés lors d'une première étape 100, puis l'utilisateur commence à pédaler et maintient son pédalage pendant la durée prévue pour l'exercice lors d'une étape subséquente 102.

Lors d'une étape 104 postérieure au début de l'étape 102, chaque cellule inertielle 30 est utilisée pour détecter les mouvements de tangage T et de roulis R de la sellette 264 ou 266 sous laquelle elle est installée, respectivement autour des axes A26 et B26, et pour envoyer à l'unité de calcul 40 le signal $S_{30}$ qui inclut les composantes Ax, Ay, Az, Gx, Gy et Gz.

En parallèle à l'étape 104, une étape 106 est mise en œuvre au moyen du capteur optique 50 pour détecter le mouvement de lacet L et transmettre à l'unité de calcul 40 le signal $S_{50}$ qui inclut l'angle de lacet détecté par le capteur optique 50.

Toujours en parallèle à l'étape 104, une autre étape 108 est mise en œuvre pour détecter les paramètres V, D et P au moyen de l'ensemble de capteurs 60 qui émet alors le signal $S_{60}$.

L'unité de calcul 40 est configurée pour recevoir les signaux $S_{30}$, $S_{50}$ et $S_{60}$ et mettre en œuvre plusieurs étapes de calcul au moyen du microprocesseur 41.

Dans une première étape de calcul 110, un algorithme de Madgwick est mis en œuvre pour déterminer des quaternions représentatifs de valeurs approximatives des amplitudes angulaires des mouvements de tangage T et de roulis R

On note respectivement $\alpha$ l'amplitude angulaire du mouvement de tangage T et $\beta$ l'amplitude angulaire du mouvement de roulis R. On note respectivement $\alpha'$ et $\beta'$ les valeurs approximatives des amplitudes angulaires de tangage et de roulis déterminées à l'étape 110.

L'algorithme de Madgwick utilisé à cette étape est décrit dans l'article de Sebastian Madgwick intitulé « An efficient orientation filter for inertial and intertia/magnetic sensor arrays» daté du 30 avril 2010 et dans l'article de Sebastian Madgwick et al. intitulé « Estimation of IMU and MARG orientation using a gradient descent algorithm » (2011 IEEE International Conférence on Rehabilitation Robotics - Rehab Week Zurich, June 29-July 1, 2011).

Dans ce cas, l'algorithme de Madgwick est utilisé avec six paramètres d'entrée.

Après l'étape 110, une étape 112 est mise en œuvre dans laquelle la valeur de l'angle détecté par le capteur optique 50 est convertie en trois composantes Mx, My et Mz équivalentes aux signaux de sortie d'un magnétomètre. L'étape de conversion 112 est effectuée en utilisant les valeurs approximatives $\alpha'$ et $\beta'$ des angles de tangage et de roulis comme des variables de correction de l'angle de lacet détecté par le capteur optique 50 et qui est incorporé au

signal $S_{50}$. Au cours de cette étape 112, le microprocesseur 41 utilise une matrice de rotation pour convertir les données issues du capteur optique 50 en données de type Mx, My et Mz.

L'algorithme de conversion utilisé à l'étape 112 inclut la mise en œuvre d'une matrice de rotation du type :

$$\mathbf{R}_{zyx}(\hat{\mathbf{x}}'', \alpha; \hat{\mathbf{y}}', \beta; \hat{\mathbf{z}}, \gamma) = \begin{bmatrix} c\gamma\, c\beta & c\gamma\, s\beta\, s\alpha - s\gamma\, c\alpha & c\gamma\, s\beta\, c\alpha + s\gamma\, s\alpha \\ s\gamma\, c\beta & s\gamma\, s\beta\, s\alpha + c\gamma\, c\alpha & s\gamma\, s\beta\, c\alpha - c\gamma\, s\alpha \\ -s\beta & c\beta\, s\alpha & c\beta\, c\alpha \end{bmatrix}$$

La définition de cette matrice de rotation est accessible via le lien suivant :
http://doucets.free.fr/Matrice_de_Rotation/rotations_intro_doc.html

Cette matrice a été simplifiée et adaptée à la problématique de la selle articulée en 3D. Elle s'exprime alors sous la forme suivante :

$$\begin{pmatrix} \cos(angle) & 0 & 0 \\ \sin(angle) & 0 & \sin(roulis) \\ 0 & 0 & \cos(tangage) * \cos(roulis) \end{pmatrix}$$

Après l'étape 112, une étape 114 est mise en œuvre au cours de laquelle un algorithme de type Madgwick est encore utilisé, cette fois avec neuf paramètres d'entrée, à savoir les grandeurs Ax, Ay, Az, Gx, Gy et Gz, Mx, My et Mz. Cette version de l'algorithme de Madgwick est donc plus élaborée que celle utilisée à l'étape 110 ou seuls six paramètres d'entrée sont exploités. Dans cette étape, l'algorithme permet de déterminer des quaternions et, sur cette base de calculer les angles d'Euler des mouvements des sellettes

Au terme de l'étape 114, les amplitudes angulaires $\alpha$, $\beta$ et $\gamma$ des mouvements de tangage

La fréquence de calcul de l'étape 110 peut être égale à la fréquence de l'étape 104, soit 100 Hz. La fréquence des étapes 112 et 114 est à égale à 100 Hz. En variante, elle peut être égale à la fréquence de l'étape 106, soit 50, roulis et lacet sont calculées. Hz.

Les étapes 110, 112 et 114 sont réalisées en double pour récupérer des grandeurs représentatives des trois mouvements, de tangage R, de roulis R et de lacet L de chaque sellette 264 ou 266. On obtient ainsi six valeurs d'angle représentatives des amplitudes angulaires de ces mouvements, à savoir

- l'angle $\alpha_G$ de tangage de la sellette de gauche 264 ;
- l'angle $\alpha_D$ de tangage de la sellette de droite 266 ;
- l'angle $\beta_G$ de roulis de la sellette de gauche 264 ;
- l'angle $\beta_D$ de roulis de la sellette de droite 266 ;
- l'angle $\gamma_G$ de lacet de la sellette de gauche 264 et
- l'angle $\gamma_D$ de lacet de la sellette de droite 266

A cet égard, on peut noter que les étapes 104 et 110 sont mises en œuvre avec une première cellule inertielle 30 pour la sellette de gauche 264 et avec une deuxième cellule inertielle 30 pour la sellette de droite 266.

Après l'étape 114, une étape 116 de sélection est mise en œuvre par l'unité de calcul 40, à une fréquence égale à celle de l'étape 114, pour sélectionner, parmi les six angles précités, quatre angles représentatifs. Comme les mouvements de tangage T des sellettes 264 et 266 sont indépendants, les angles $\alpha_G$ et $\alpha_D$ sont chacun sélectionnés. Comme les mouvements de roulis R des sellettes sont liés, on peut considérer que les angles $\beta_G$ et $\beta_D$ sont identiques ou quasi-identiques et seul l'un d'entre eux est sélectionné, que l'on nomme $\beta$ dans la suite. De même, comme mouvements de lacet L des sellettes sont liés, on peut considérer que les angles $\gamma_G$ et $\gamma_D$ sont identiques ou quasi-identiques et seul l'un d'entre eux est sélectionné, que l'on nomme $\gamma$ dans la suite.

Après l'étape 116, une étape 118 est mise en œuvre, au cours de laquelle le signal $S_{40}$ est envoyé par l'unité de calcul 40 à l'écran 29. Ce signal $S_{40}$ inclut les angles sélectionnés $\alpha_G$, $\alpha_D$, $\beta$ et $\gamma$, ainsi que la vitesse V, la durée D, la puissance P du pédalage, et la fréquence cardiaque F qui ont été fournies par l'ensemble des capteurs 60.

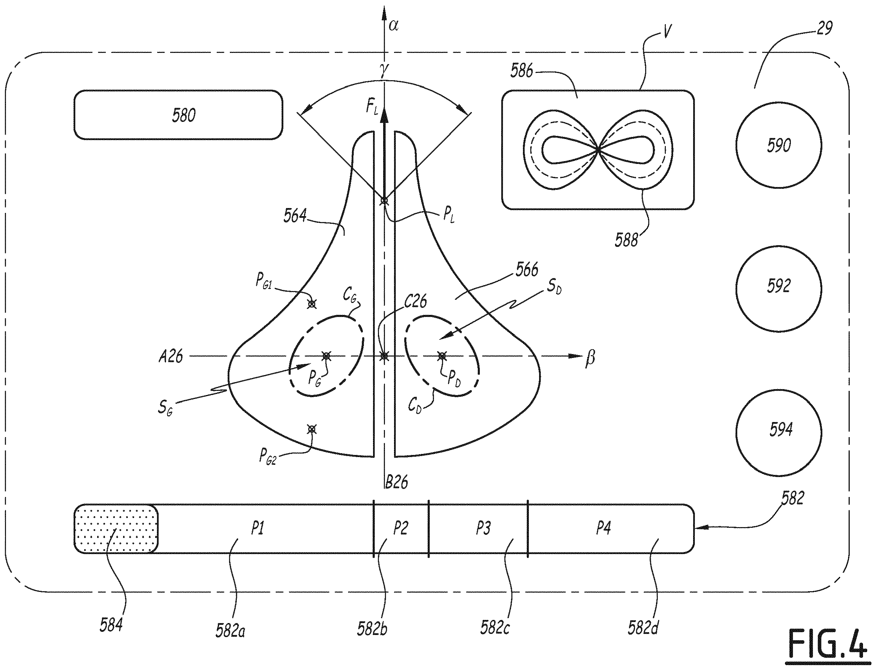

L'écran 29 reçoit le signal $S_{40}$ lors d'une étape 120 et affiche, lors d'une étape 122, certaines données tirées de ce signal $S_{40}$ en utilisant une interface homme/machine visible à la figure 4.

Sur cette interface homme/machine, deux icônes 564 et 566 représentent respectivement les sellettes 264 et 266. En ce sens, les icônes 564 et 566 forment des symboles de sellettes, respectivement pour les sellettes 264 et 266. Une zone de texte 580 permet d'afficher un identifiant de l'utilisateur, par exemple son prénom et son nom. Des boutons 590, 592 et 594 sont prévus respectivement pour faire démarrer, mettre en pause ou arrêter complètement le fonctionnement de l'appareil d'exercice 2. L'étape 100 mentionnée ci-dessus est initiée par un appui sur le bouton 590 de démarrage.

Une barre horizontale 582 est disposée en partie basse de l'écran 29 et permet d'afficher, notamment au moyen d'un code couleur, la durée et/ou la puissance de pédalage. Dans l'exemple, cette durée de pédalage est représentée par un rectangle 584 dont la largeur horizontale augmente en fonction de la durée de pédalage. Au sein de la barre 582, plusieurs zones 582a, 582b, 582c et 582d peuvent être affichées au cours desquelles différentes puissances de pédalage doivent être mises en œuvre par l'utilisateur, dans l'exemple quatre puissances de pédalage P1, P2, P3 et P4 repérées par des couleurs différentes ou d'une autre manière.

Une zone graphique 586 permet d'afficher un signe 588 dont la géométrie varie en fonction des angles des mouvements de tangage T, roulis R et lacet L. Le signe 588 forme un symbole d'amplitude angulaire pour les angles $\alpha_G$, $\alpha_D$, $\beta$ et $\gamma$, c'est-à-dire les angles $\alpha_G$, $\alpha_D$, $\beta_G$, $\beta_D$ $\gamma_G$ et $\gamma_D$, puisque les angles $\beta_G$ et $\beta_D$ sont identiques, de même que les angles $\gamma_G$ et $\gamma_D$.

Le résultat de l'étape de sélection 116 est affiché sur l'écran 29 sous la forme d'un point $P_G$ d'appui de l'ischion gauche de l'utilisateur sur la sellette 264, ainsi que sous la forme d'un point $P_D$ d'appui de l'ischion droit de l'utilisateur sur la selle 566.

Plus précisément, l'interface graphique de l'écran 29 est conçue de telle sorte que l'axe des abscisses, qui est confondu avec l'axe A26 dans la représentation de la figure 4, représente la valeur de l'angle de roulis $\beta$, alors que l'axe des ordonnées, qui est confondu avec l'axe B26 dans la représentation de la figure 4, représente la valeur des angles de tangage gauche et droit $\alpha_G$ et $\alpha_D$.

Il est ainsi possible d'afficher le point $P_G$ en fonction des valeurs des angles $\alpha_G$ et $\beta$ dans le repère des axes A26 et B26 et le point $P_D$ en fonction des valeurs des angles $\alpha_D$ et $\beta$ dans le même repère.

En pratique, l'appui des ischions d'un utilisateur sur sellettes 264 et 266 n'est pas ponctuel, mais réparti sur une zone d'aire relativement faible, inférieure à quelques cm$^2$. On définit le point d'appui d'un ischion comme le centre d'une telle zone.

Idéalement, le point d'appui $P_G$ est inscrit à l'intérieur d'une courbe $C_G$ qui délimite une zone correspondant à un positionnement correct de la partie gauche du bassin de l'utilisateur sur la sellette 264. Cette courbe $C_G$ est matérialisée sur l'écran 29 par un trait discontinu au sein de l'icône 564. De la même façon, une courbe $C_D$ définit, au sein de l'icône 566, une zone dans laquelle doit normalement se trouver le point $P_D$. Les surfaces $S_G$ et $S_D$ entourées par les courbes $C_G$ et $C_D$ sur l'écran 29 définissent les lieux de positions de référence acceptables pour les points $P_G$ et $P_D$. Les définitions des courbes $C_G$ et $C_G$ et des surfaces $S_G$ et $S_D$ peuvent être mémorisées dans la mémoire 44, ce qui permet à l'unité 40 de déterminer un écart éventuel entre la position de chaque point d'appui, $P_G$ ou $P_D$, et une position de référence correspondante, c'est-à-dire un point de la surface $S_G$ ou $S_D$. L'écran 29 est configuré pour montrer cet écart en affichant la position relative des points $P_G$ et $P_D$ et des surfaces $S_G$ et $S_G$.

Sur la figure 4, le point $P_{G1}$, situé hors de la surface $S_G$, correspond au cas où l'utilisateur se tient trop en avant sur la selle 26, ce qui a pour effet que l'amplitude de tangage est trop importante. Ceci induit un risque de glissement vers l'avant qui invite à ajuster le réglage du recul de la selle.

Le point $P_{G2}$, également situé hors de la surface $S_G$, représente le cas où l'utilisateur se tient trop en arrière, ce qui a pour effet un tangage trop faible. Ceci induit un mouvement insuffisant ou non optimum pour bon du mouvement physiologique, et invite au réglage de la position de la personne sur le vélo avec le recul ou hauteur de selle.

On peut également envisager le cas où les points d'appui $P_G$ et $P_D$ ne sont pas disposés symétriquement par rapport à l'espace défini entre les sellettes 264 et 266, ce que l'on repère sur les icônes 564 et 566 du fait d'un défaut de symétrie du positionnement de ces points $P_G$ et $P_D$ sur l'écran 29. Ce défaut de symétrie de positionnement doit être corrigé car il induit un mouvement insuffisant ou non optimum pour bon du mouvement physiologique et qui invite la personne à bien se centrer sur l'assise.

Ainsi, en supposant que les courbes $C_G$ et $C_D$ sont affichées en permanence sur l'écran 29, notamment en tant que partie des icônes 564 et 566, il est possible à l'utilisateur qui regarde l'écran 29 situé en face de lui de repérer si ses points d'appui $P_G$ et $P_D$ sont correctement situés et de corriger, le cas échéant, sa posture, de façon intuitive, en se déplaçant sur la sellette, en étant éventuellement guidé par la personne qui l'assiste.

La position des points $P_G$ et $P_D$ selon une direction horizontale à la figure 4, c'est-à-dire parallèlement à l'axe A26 a une influence sur l'amplitude angulaire $\beta$ du mouvement de roulis R. Plus les points $P_G$ et $P_D$ sont proches de l'espace entre les sellettes, c'est-à-dire de l'axe B26, plus le mouvement de roulis R est important. On remarque que l'écartement entre les points $P_G$ et $P_D$ résulte de l'anatomie de l'utilisateur et n'est pas modifiable.

L'interface homme/machine comprend également une représentation du mouvement de lacet L, sous la forme d'une flèche $F_L$ qui oscille autour de l'axe B26, avec une amplitude angulaire qui est fonction de la valeur de cet angle. Pour faciliter la visualisation de la flèche $F_L$, le point d'articulation $P_L$ de cette flèche sur l'écran 29 est décalé, le long de l'axe B26, par rapport à l'axe C26. Ceci permet que la flèche $F_L$ ne soit pas située sur la même partie des icônes 564 et 566 que les courbes $C_G$ et $C_D$.

D'autre part, le signe 588 est élaboré en fonction des paramètres calculés par l'unité 40 lors de l'étape 116.

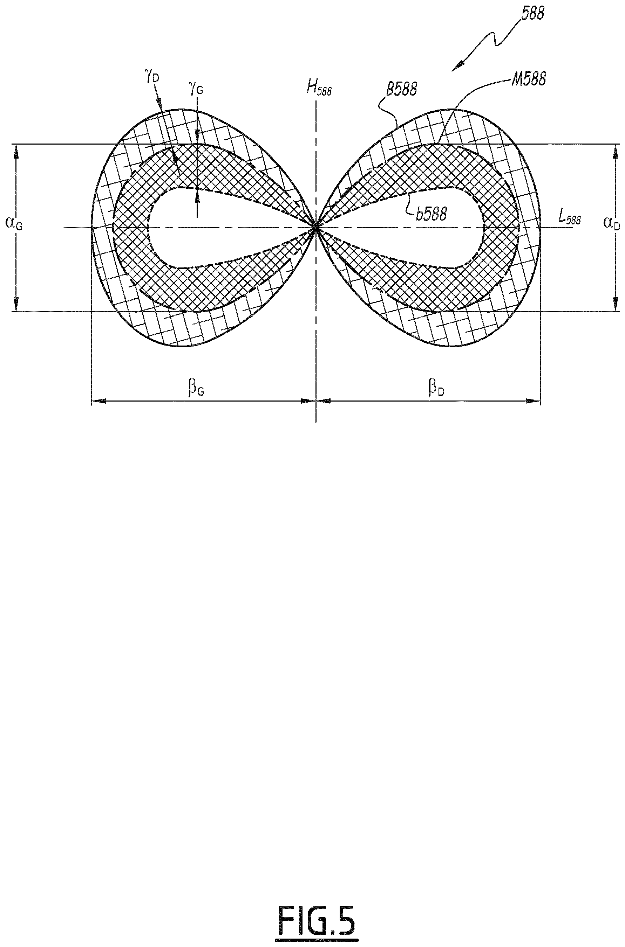

Comme visible à la figure 5, le signe 588 est bidimensionnel et s'étend, en largeur, parallèlement à un axe L588 et, en hauteur, parallèlement à un axe H588. Par convention, on peut prévoir que la largeur de la partie du signe 588 située à gauche de l'axe H588 est une représentation de la valeur quasi-instantanée de l'angle de roulis $\beta_G$ observé pour la sellette de gauche 264. De la même façon, la largeur de la partie du signe 588 située à droite de l'axe H588 est représentative de l'angle quasi-instantané de roulis $\beta_D$ de la sellette de droite 266. Par « quasi-instantanée », on entend que les valeurs de l'angle de roulis sont des moyennes des dernières valeurs relevées, par exemple des 10 dernières positions.

On définit la médiane M588 du signe 588 comme une courbe équidistante de son bord intérieur b588 et de son bord extérieur B588.

Par convention, on peut considérer que la hauteur entre les points extrêmes de la médiane M588 dans la partie gauche du signe 588 représente la valeur moyenne $\alpha_G$ de l'angle de tangage de la sellette de gauche 264, alors que la même distance dans la partie droite du signe 588 représente la valeur moyenne $\alpha_D$ de l'angle de tangage de la sellette de droite 266. L588. Les moyennes utilisées pour les valeurs des angles de tangage sont calculées sur les 10 dernières valeurs, sur les valeurs depuis le début de la séance, ou selon toute autre règle de calcul adaptée.

Par convention, on peut également prévoir que la distance entre la médiane M588 et le bord intérieur b588 représente la valeur moyenne $\gamma_G$ de l'angle de lacet de la sellette de gauche 264, alors que la distance entre la médiane M288 et le bord extérieur B588 représente la valeur moyenne $\gamma_D$ de l'angle de lacet de la sellette de droite 266. La moyenne utilisée pour les angles de lacet est effectuée de la même façon que pour les angles de tangage, ou d'une autre façon adaptée.

L'homme du métier comprendra alors que la manière particulière d'afficher la ou les amplitudes angulaires $\alpha$, $\beta$, $\gamma$ est un deuxième aspect de l'invention qui est distinct d'un premier aspect de l'invention correspondant à la détection du ou des mouvements parmi les mouvements de tangage T, roulis R et lacet L, et à la détermination associée de la ou des amplitudes angulaires $\alpha$, $\beta$, $\gamma$.

Ce deuxième aspect de l'invention comprend notamment la détermination d'un unique symbole 588 représentatif de plusieurs amplitudes angulaires $\alpha$, $\beta$, $\gamma$, avec chaque amplitude angulaire $\alpha$, $\beta$, $\gamma$ correspondant à une dimension respective dudit symbole.

En complément facultatif, l'unique symbole 588 déterminé représente plusieurs amplitudes angulaires $\alpha$, $\beta$, $\gamma$ de chacune des deux sellettes 264, 266, l'unique symbole étant décomposé en des première et deuxième parties distinctes, la première partie correspondant à la sellette de gauche 264 et la deuxième partie correspondant à la sellette de droite 266. Pour faciliter l'interprétation des grandeurs affichées par l'utilisateur, les première et deuxième parties sont de préférence disposées de part et d'autre d'un axe de référence, tel que l'axe H588, avec par exemple la première partie à gauche de l'axe de référence et la deuxième partie à droite dudit axe de référence.

En complément facultatif encore, au moins deux amplitudes angulaires $\alpha$, $\beta$ correspondent chacune à une dimension dudit symbole selon une direction respective, distincte d'une amplitude angulaire $\alpha$, $\beta$ à l'autre. Dans l'exemple de la figure 5, la représentation de l'amplitude angulaire $\beta_G$, $\beta_D$ du mouvement de roulis R de chaque sellette 264, 266 correspond à une dimension du symbole 588 selon une direction horizontale, c'est-à-dire parallèlement à l'axe L588, et la représentation de l'amplitude angulaire $\alpha_G$, $\alpha_D$ du mouvement de tangage T de chaque sellette 264, 266 correspond à une dimension du symbole 588 selon une direction perpendiculaire à la direction associée au mouvement de roulis R, telle qu'une direction verticale, c'est-à-dire parallèlement à l'axe H588.

Dans l'exemple décrit précédemment, un seul capteur 50 est utilisé pour mesurer l'angle de lacet $\gamma$, en considérant que les sellettes 264 et 266 sont solidaires en rotation autour de l'axe C26, et les valeurs des angles $\gamma_G$ et $\gamma_D$ sont alors identiques, ce qui correspond au fait que la courbe M588 est la médiane du signe 588. Il pourrait toutefois en être autrement, avec notamment un capteur optique sous chaque sellette 264, 266 selon la variante ci-après.

Pour permettre d'identifier facilement la position de la médiane M588, les parties du signe 588 disposées de part et d'autre de cette médiane peuvent être coloriées différemment.

L'affichage du signe 588 sur l'écran 29 permet à l'utilisateur de vérifier que les mouvements de chaque sellette 264 et 266 sont réguliers et harmonieux, c'est-à-dire sans à-coup notable. La symétrie du signe 588 par rapport aux axes L588 et H588 permet également à l'utilisateur de s'assurer que les mouvements de la selle sont équilibrés. En pratique, la géométrie du signe 588 est comparable à celle du signe « infini ». Un indice de régularité et de conformité du mouvement de pédalage, vis-à-vis d'un programme d'exercice préétabli, peut être que la forme du signe 588 est proche de celle du signe « infini ».

Selon une variante non représentée de l'invention, un capteur optique peut être disposé sous chaque sellette 264 et 266, ce qui permet alors de déterminer les mouvements de lacet respectifs des deux sellettes indépendamment l'un de l'autre. Les étapes de calcul 110 à 118 et d'affichage 122 sont alors adaptées.

Dans le cas mentionné ci-dessus où les cellules inertielles ont un magnétomètre actif, à la place du capteur optique, les calculs effectués dans la cellule 40 sont adaptés. Les étapes 110 et 112 sont supprimées et l'étape 114 est effectuée directement à partir des signaux de sortie des cellules inertielles 30.

Les valeurs des amplitudes α, β et γ des angles de tangage, roulis et lacet, calculées à l'étape 114, peuvent être stockées dans la mémoire 44 ainsi que, le cas échéant, dans les mémoires des appareils 200 et 300. Il est ainsi possible d'observer les variations de ces valeurs au cours d'une séance d'exercice physique sur l'appareil 2 et de comparer ces valeurs au cours de séances d'exercice physique successives sur cet appareil, voir au cours d'une même séance. L'invention permet donc d'assurer un suivi des performances de l'utilisateur.

Il est également possible de stocker les valeurs V, P, F et D pour une séance d'exercice ou, plus précisément, un tableau donnant les valeurs de vitesse V, de puissance P et de fréquence cardiaque F en fonction de la durée D écoulée depuis le début de la séance, ce qui permet d'évaluer les changements de rythme et d'effort d'un utilisateur au cours d'une séance. Là encore, ceci permet d'assurer un suivi des progrès d'un utilisateur.

De préférence, le signe 588 est obtenu en intégrant, sur une période d'utilisation de l'appareil, par exemple au cours d'une séance d'exercice, les amplitudes de mouvements de tangage T, roulis R et lacet L.

A la place de l'algorithme de Madgwick mentionné ci-dessus, il est possible d'utiliser pour les étapes 110 et 114 d'autres algorithmes de types comparables, notamment un algorithme de Mahony. De même en est-il pour les algorithmes des étapes d'inversion 112, ou un autre type de matrice de rotation peut être utilisé, et de sélection 116, ou une autre sélection peut être effectuée, par exemple sur la base d'une moyenne des valeurs des angles $\beta_G$ et $\beta_D$, d'une part, $\gamma_G$ et $\gamma_D$, d'autre part.

Les liaisons de données 32, 42, 52 et 62 sont par exemple des liaisons filaires ou, en variante, des liaisons sans fil, telles que des liaisons radioélectriques.

Selon une variante non représentée de l'invention, l'écran 29 peut être omis et l'interface homme/machine d'affichage des points d'appui $P_G$, $P_D$ a lieu uniquement sur un écran d'un matériel annexe, tel que l'écran du téléphone 200 ou celui de l'ordinateur 300, ou tout autre écran d'un terminal utilisateur dont on considère qu'il fait alors partie de l'appareil d'exercice physique 2.

Le mode de réalisation et les variantes envisagés ci-dessus peuvent être combinés pour générer de nouveaux modes de réalisation de l'invention.

## Revendications

1. Appareil d'exercice physique (2) comprenant un cadre (2') équipé d'un pédalier (24) et d'une selle (26), la selle comprenant elle-même un châssis (262) fixé sur le cadre, deux sellettes (264, 266) et des organes (267, 268) d'articulation de chaque sellette par rapport au châssis, autour d'un axe de tangage (A26), autour d'un axe de roulis (B26) et autour d'un axe de lacet (L26), **caractérisé en ce que** l'appareil comprend :

   - des capteurs (30, 50) de détection d'un mouvement de tangage (T), d'un mouvement de roulis (R) et d'un mouvement de lacet (L) de chaque sellette, respectivement autour des axes de tangage, roulis et lacet, ces mouvements résultant d'un pédalage effectué par un utilisateur ;
   - au moins une unité de calcul (40) configurée pour déterminer, à partir de signaux ($S_{30}$, $S_{50}$) de sortie des capteurs, des amplitudes angulaires ($\alpha_G$, $\alpha_D$, $\beta$, $\gamma$) des mouvements de tangage (T), roulis (R) et lacet (L) ;
   - au moins un écran (29, 200, 300) d'affichage, en fonction des amplitudes angulaires déterminées par l'unité de calcul (40), de la position sur chaque sellette d'un point d'appui ($P_G$, $P_D$) d'un ischion de l'utilisateur en train de pédaler.

2. Appareil selon la revendication 1, **caractérisé en ce que** les capteurs de détection incluent au moins une cellule inertielle (30) fixée sur chaque sellette (264, 266).

3. Appareil selon la revendication 2, **caractérisé en ce que** les cellules inertielles (30) détectent les mouvements de tangage (T) et de roulis (R) et **en ce qu'**au moins un capteur optique (50) est utilisé pour détecter le mouvement de lacet (L) de chaque sellette (264, 266).

4. Appareil selon l'une des revendications précédentes, **caractérisé en ce que** l'unité de calcul (40) est configurée pour déterminer un écart entre la position de chaque point d'appui ($P_G$, $P_D$) sur la sellette et une position de référence ($S_G$, $S_D$) et **en ce que** l'écran (29) est configuré pour afficher cet écart.

5. Appareil selon l'une des revendications précédentes, **caractérisé en ce que** l'écran (29) est disposé en face de l'utilisateur assis sur la selle (26), de préférence au niveau d'un guidon (28) l'appareil (2).

6. Méthode d'entraînement d'un utilisateur sur un appareil d'exercice physique (2) selon l'une des revendications précédentes, **caractérisée en ce qu'**elle comprend des étapes consistant à :

a) détecter (104, 106) les mouvements de tangage (T), roulis (R) et lacet (L) au moyen des capteurs (30, 50) ;

b) déterminer (110, 112, 114) les amplitudes angulaires ($\alpha_G$, $\alpha_D$, $\beta$, $\gamma$) des mouvements de tangage (T), roulis (R) et lacet (L) el

c) afficher (122) sur l'écran (29) les positions des points d'appui ($P_G$, $P_D$) des ischions en fonction des amplitudes angulaires déterminées par l'unité de calcul.

**7.** Méthode selon la revendication 6, **caractérisé en ce que** l'appareil est selon la revendication 3 et **en ce que** l'étape b) comprend les sous-étapes suivantes :

b1) calcul (110), de préférence par un algorithme de Madgwick à 6 axes, de valeurs approximatives ($\alpha'$, $\beta'$) des amplitudes de tangage et de roulis, sur la base de composantes vectorielles (Ax, Ay, Az, Gx, Gy, Gz) des mouvements de tangage (T) et de roulis (R) déterminées par les cellules inertielles (30) ;

b2) calcul (112) de composantes vectorielles (Mx, My, Mz) correspondant à un signal de sortie d'un magnétomètre, sur la base du signal de sortie ($S_{50}$) du capteur optique (50) et des valeurs approximatives calculées à la sous-étape b1) ;

b3) calcul (114), de préférence par un algorithme de Madgwick 9 axes, des valeurs ($\alpha$, $\beta$, $\gamma$) des amplitudes de tangage, roulis et lacet.

**8.** Méthode selon l'une des revendications 6 ou 7, **caractérisée en ce que** lors de l'étape c), l'écran affiche également les amplitudes angulaires ($\alpha_G$, $\alpha_D$, $\beta$, $\gamma$) déterminées à l'étape b).

**9.** Méthode selon la revendication 8, **caractérisée en ce qu'**elle comprend des étapes supplémentaires consistant à :

d) déterminer un unique symbole (588) représentatif des amplitudes angulaires ($\alpha_G$, $\alpha_D$, $\beta$, $\gamma$), chaque amplitude angulaire ($\alpha_G$, $\alpha_D$, $\beta$, $\gamma$) correspondant à une dimension respective dudit symbole ;

e) afficher sur l'écran (29) le symbole déterminé à l'étape d).

**10.** Méthode selon l'une des revendications 6 à 9, **caractérisée en ce que** l'appareil est selon la revendication 4 et **en ce que**, lors de l'étape c), l'écran affiche une représentation (564, 566) des sellettes (264, 266), les positions ($P_G$, $P_D$) d'appui des ischions par rapport à la représentation des sellettes et une représentation ($C_G$, $C_D$) de la position de référence par rapport à la représentation des sellettes.

**Patentansprüche**

**1.** Trainingsgerät (2), umfassend einen Rahmen (2'), der mit einer Tretkurbel (24) und einem Sattel (26) ausgestattet ist, der Sattel umfassend an sich ein am Rahmen befestigtes Gestell (262), zwei Sattelhälften (264, 266) und Elemente (267, 268) zum Anlenken von jedem Sattel in Bezug auf das Gestell um eine Nickachse (A26), um eine Rollachse (B26) und um eine Gierachse (L26), **dadurch gekennzeichnet, dass** das Gerät Folgendes umfasst:

- Sensoren (30, 50) zum Erfassen einer Nickbewegung (T), einer Rollbewegung (R) und einer Gierbewegung (L) von jeder Sattelhälfte um die Nick-, Roll- bzw. Gierachse, wobei diese Bewegungen aus dem Treten resultieren, das von einem Benutzer durchgeführt wird;

- mindestens eine Recheneinheit (40), die konfiguriert ist, um anhand der Ausgangssignale ($S_{30}$, $S_{50}$) der Sensoren Winkelamplituden ($\alpha_G$, $\alpha_D$, $\beta$, $\gamma$) der Nick- (T), Roll- (R) und Gierbewegungen (L) zu bestimmen;

- mindestens einen Bildschirm (29, 200, 300) zur Anzeige, abhängig von den durch die Recheneinheit (40) bestimmten Winkelamplituden, der Position auf jeder Sattelhälfte eines Auflagepunkts ($P_G$, $P_D$) eines Sitzbeins des radelnden Benutzers.

**2.** Gerät nach Anspruch 1, **dadurch gekennzeichnet, dass** die Erfassungssensoren mindestens eine Trägheitszelle (30) umfassen, die an jeder Sattelhälfte (264, 266) befestigt ist.

**3.** Gerät nach Anspruch 2, **dadurch gekennzeichnet, dass** die Trägheitszellen (30) die Nick- (T) und Rollbewegungen (R) erfassen und dass mindestens ein optischer Sensor (50) verwendet wird, um die Gierbewegung (L) von jeder Sattelhälfte (264, 266) zu erfassen.

**4.** Gerät nach einem der vorherigen Ansprüche, **dadurch gekennzeichnet, dass** die Recheneinheit (40) konfiguriert ist, um eine Abweichung zwischen der Position von jedem Auflagepunkt ($P_G$, $P_D$) auf der Sattelhälfte und einer Referenzposition (S$_G$, S$_D$) zu bestimmen, und dass der Bildschirm (29) konfiguriert ist, um diese Abweichung anzuzeigen.

**5.** Gerät nach einem der vorherigen Ansprüche, **dadurch gekennzeichnet, dass** der Bildschirm (29) vor dem auf dem Sattel (26) sitzenden Benutzer angeordnet ist, vorzugsweise an einem Lenker (28) des Geräts (2).

**6.** Verfahren zum Trainieren eines Benutzers auf einem Trainingsgerät (2) nach einem der vorherigen Ansprüche, **dadurch gekennzeichnet, dass** es Schritte umfasst, die aus Folgendem bestehen:

> a) Erfassen (104, 106) der Nick- (T), Roll- (R) und Gier- (L) Bewegungen mittels der Sensoren (30, 50);
> b) Bestimmen (110, 112, 114) der Winkelamplituden ($\alpha_G$, $\alpha_D$, $\beta$, $\gamma$) der Nick-(T), Roll- (R) und Gier- (L) Bewegungen und
> c) Anzeigen (122) der Positionen der Auflagepunkte (P$_G$, P$_D$) der Sitzbeine auf dem Bildschirm (29) abhängig von den durch die Recheneinheit bestimmten Winkelamplituden.

**7.** Verfahren nach Anspruch 6, **dadurch gekennzeichnet, dass** die Vorrichtung nach Anspruch 3 ist und dass Schritt b) die folgenden Unterschritte umfasst:

> b1) Berechnen (110), vorzugsweise durch einen 6-achsigen Madgwick-Algorithmus, von Näherungswerten ($\alpha'$, $\beta'$) der Nick- und Rollamplituden auf der Grundlage von Vektorkomponenten (Ax, Ay, Az, Gx, Gy, Gz) der Nick- (T) und Rollbewegungen (R), die von den Trägheitszellen (30) bestimmt werden;
> b2) Berechnen (112) von Vektorkomponenten (Mx, My, Mz), die einem Ausgangssignal eines Magnetometers entsprechen, basierend auf dem Ausgangssignal (S$_{50}$) des optischen Sensors (50) und der in Unterschritt b1) berechneten Näherungswerte;
> b3) Berechnen (114), vorzugsweise durch einen 9-achsigen-Madgwick-Algorithmus, der Werte ($\alpha$, $\beta$, $\gamma$) der Nick-, Roll- und Gieramplituden.

**8.** Verfahren nach einem der Ansprüche 6 oder 7, **dadurch gekennzeichnet, dass** in Schritt c) auf dem Bildschirm auch die in Schritt b) bestimmten Winkelamplituden ($\alpha_G$, $\alpha_D$, $\beta$, $\gamma$) angezeigt werden.

**9.** Verfahren nach Anspruch 8, **dadurch gekennzeichnet, dass** es ergänzende Schritte umfasst, die aus Folgendem bestehen:

> d) Bestimmen eines einzelnen Symbols (588), das repräsentativ für die Winkelamplituden ($\alpha_G$, $\alpha_D$, $\beta$, $\gamma$) ist, wobei jede Winkelamplitude ($\alpha_G$, $\alpha_D$, $\beta$, $\gamma$) einer jeweiligen Dimension des Symbols entspricht;
> e) Anzeigen des in Schritt d) bestimmten Symbols auf dem Bildschirm (29).

**10.** Verfahren nach einem der Ansprüche 6 bis 9, **dadurch gekennzeichnet, dass** das Gerät nach Anspruch 4 ist und dass in Schritt c) der Bildschirm eine Darstellung (564, 566) der Sattelhälften (264, 266), der Positionen (P$_G$, P$_D$) der Auflage des Sitzbeins in Bezug auf die Darstellung der Sattelhälften und eine Darstellung (C$_G$, C$_D$) der Referenzposition in Bezug auf die Darstellung der Sattelhälften anzeigt.

**Claims**

**1.** A physical exercise apparatus (2) comprising a frame (2') equipped with a crankset (24) and a saddle (26), the saddle itself comprising a chassis (262) fastened to the frame, two saddle parts (264, 266) and members (267, 268) for articulating each saddle part with respect to the chassis, about a pitch axis (A26), about a roll axis (B26) and about a yaw axis (L26), **characterized in that** the apparatus comprises:

> - sensors (30, 50) for detecting a pitch movement (T), a roll movement (R) and a yaw movement (L) of each saddle part about the pitch, roll and yaw axes, respectively, these movements resulting from pedaling by a user;
> - at least one calculation unit (40) configured to determine angular amplitudes ($\alpha_G$, $\alpha_D$, $\beta$, $\gamma$) of the pitch (T), roll (R) and yaw (L) movements, from output signals (S$_{30}$, S$_{50}$) from the sensors;
> - at least one screen (29, 200, 300) for displaying the position on each saddle part of a bearing point (P$_G$, P$_D$) of the user's ischium while pedaling, depending on the angular amplitudes determined by the calculation unit (40).

**2.** The apparatus according to claim 1, **characterized in that** the detection sensors comprise at least one inertial cell (30) attached to each saddle part (264, 266).

3. The apparatus according to claim 2, **characterized in that** the inertial cells (30) detect the pitch (T) and roll (R) movements and **in that** at least one optical sensor (50) is used to detect yaw (L) movement of each saddle part (264, 266).

4. The apparatus according to any of the preceding claims, **characterized in that** the calculation unit (40) is configured to determine a deviation between the position of each bearing point ($P_G$, $P_D$) on the saddle part and a reference position ($S_G$, $S_D$) and **in that** the screen (29) is configured to display this deviation.

5. The apparatus according to any of the preceding claims, **characterized in that** the screen (29) is positioned in front of the user sitting on the saddle (26), preferably on a handlebar (28) of the apparatus (2).

6. A method for training a user on a physical exercise apparatus (2) according to any of the preceding claims, **characterized in that** it comprises steps of:

   a) detecting (104, 106) the pitch (T), roll (R) and yaw (L) movements by means of sensors (30, 50);
   b) determining (110, 112, 114) the angular amplitudes ($\alpha_G$, $\alpha_D$, $\beta$, $\gamma$) of the pitch (T), roll (R) and yaw (L) movements; and
   c) displaying (122) on the screen (29) the positions of the ischium support points (PG, PD), depending on the angular amplitudes determined by the calculation unit.

7. The method according to claim 6, **characterized in that** the apparatus is according to claim 3 and **in that** step b) comprises the following sub-steps:

   b1) calculating (110) approximate pitch and roll amplitude values ($\alpha'$, $\beta'$), preferably by a 6-axis Madgwick algorithm, based on vector components (Ax, Ay, Az, Gx, Gy, Gz) of the pitch (T) and roll (R) movements determined by the inertial cells (30);
   b2) calculating (112) vector components (Mx, My, Mz) corresponding to a magnetometer output signal ($S_{50}$), based on the output signal of the optical sensor (50) and the approximate values calculated in sub-step b1);
   b3) calculating (114) pitch, roll and yaw amplitude values ($\alpha$, $\beta$, $\gamma$), preferably by a 9-axis Madgwick algorithm.

8. The method according to any of claims 6 or 7, **characterized in that** in step c), the screen also shows the angular amplitudes ($\alpha_G$, $\alpha_D$, $\beta$, $\gamma$) determined in step b).

9. The method of claim 8, **characterized in that** it comprises additional steps of:

   d) determining a single symbol (588) representing the angular amplitudes ($\alpha_G$, $\alpha_D$, $\beta$, $\gamma$), with each angular amplitude ($\alpha_G$, $\alpha_D$, $\beta$, $\gamma$) corresponding to a respective dimension of said symbol;
   e) displaying the symbol determined in step d) on the screen (29).

10. The method according to any of claims 6 to 9, wherein the apparatus is according to claim 4 and wherein, in step c), the screen shows a representation (564, 566) of the saddle parts (264, 266), the ischium bearing positions ($P_G$, $P_D$) relative to the representation of the saddle parts and a representation ($C_G$, $C_D$) of the reference position relative to the representation of the saddle parts.

**FIG.1**

EP 3 883 844 B1

FIG.2

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013135697 A

**Littérature non-brevet citée dans la description**

- **SEBASTIAN MADGWICK.** *An efficient orientation filter for inertial and intertia/magnetic sensor arrays,* 30 Avril 2010

- **SEBASTIAN MADGWICK et al.** Estimation of IMU and MARG orientation using a gradient descent algorithm. *2011 IEEE International Conférence on Rehabilitation Robotics - Rehab Week Zurich,* 29 Juin 2011